# EUROPÄISCHE PATENTSCHRIFT

(11) **EP 1 063 121 B1**
(45) Veröffentlichungstag und Bekanntmachung des Hinweises auf die Patenterteilung: **03.11.2004**
(21) Anmeldenummer: 00108745.1
(22) Anmeldetag: 22.04.2000
(51) Int. Cl.: B60P 1/64, B60P 1/16

(54) **Vorrichtung zur Handhabung von Wechselbehältern**
Device for the handling of containers
Dispositif de manutention de conteneurs

(30) Priorität: 26.06.1999 DE 29911154 U
(43) Veröffentlichungstag der Anmeldung: 27.12.2000
(73) Patentinhaber: Hüffermann Fahrzeugtechnik GmbH, 27793 Wildeshausen (DE)
(72) Erfinder: Stach, Lothar, Dr., 27793 Wildeshausen (DE)
(74) Vertreter: Hansmann, Dierk, Dipl.-Ing.

(56) Entgegenhaltungen:
- EP-A- 0 564 403
- EP-A- 0 712 756
- FR-A- 2 155 043
- US-A- 4 225 280
- US-A- 4 352 625
- US-A- 4 704 063

## Beschreibung

Die Neuerung bezieht sich auf eine Vorrichtung zur Handhabung von Wechselbehältern auf Fahrzeugen mit einem Kipprahmen, entsprechend den Merkmalen des Oberbegriffes von Anspruch 1.

Eine Vorrichtung zur Handhabung von derartigen Wechselbehältern Anordnung ist nach der EP 712 756 bekannt und ermöglicht die Handhabung und Aufnahme von Wechselbehältern. Es hat sich gezeigt, daß es zweckmäßig ist, eine zusätzliche Sicherung durch die Aufnahmevorrichtung auf dem Kipprahmen durchzuführen

Eine gattungsgemässe Vorrichtung ist aus FR-A-2 155 043 bekannt. Die Aufgabe der Neuerung ist es, eine einfache Ausbildung zu schaffen, die die vorhandenen Elemente einsetzt, um eine Sicherung des Wechselbehälters in allen Lagen am Fahrzeug zu ermöglichen.

Die Lösung dieser Aufgabe erfolgt neuerungsgemäß dadurch, daß der Schlitten aus einem Grundelement mit der Aufnahme und einem am Grundelement verschiebbar geführten Verriegelungselement mit einem der Aufnahme zugeordneten Dorn zum Verriegeln aufweist, wobei Grundelement und Verriegelungselement über Federn gekoppelt sind und der Dorn über die Federn in der Verriegelungsposition gehalten wird, während in der Aufnahmeposition des Wechselbehälters und Freigabe der Aufnahme am Grundelement das Verriegelungselement über fahrzeugfeste Stopper beim Verschieben des Schlittens blockierbar und das Grundelement zur Freigabe der Aufnahme durch den zugeordneten Dorn weiter verschiebbar ist.

Hierdurch wird die Schlittenausbildung aus Grundelement und Verriegelungselement eine einfache Ausbildung ermöglicht, die außen in der Aufnahmeposition eine Zwangsverriegelung der Transportöse selbsttätig durchführt und außerhalb der Aufnahmeposition eine Fixierung des Wechselbehälters ermöglicht.

Eine günstige Ausbildung besteht darin, daß das Grundelement zwei parallele Aufnahmen aufweist und zugeordnete Dorne am Verriegelungselement ausgebildet sind.

Zur verschiebbaren Verbindung von Grundelement und Verriegelungselement, wir vorgeschlagen, daß das Grundelement buchsenartige Führungen für die Dorne des Verriegelungselementes trägt.

Um beim Verriegelungsvorgang eine Transportöse gegebenenfalls in die Aufnahme leichter einzuführen, ist vorgesehen, daß die Dorne in ihren Endbereichen verjüngt ausgebildet sind.

In den Zeichnungen ist ein Ausführungsbeispiel der Neuerung schematisch dargestellt. Es zeigen:

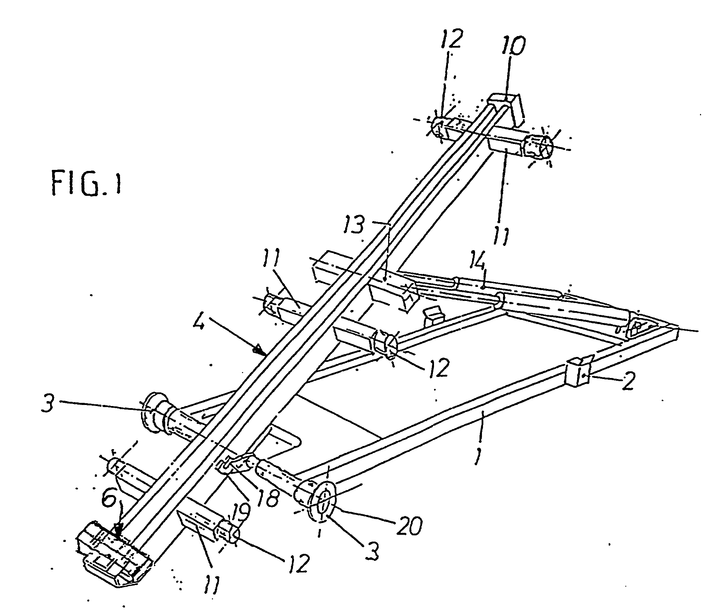

- Fig. 1: eine Prinzipdarstellung eines Kipprahmens an einem Fahrzeug,

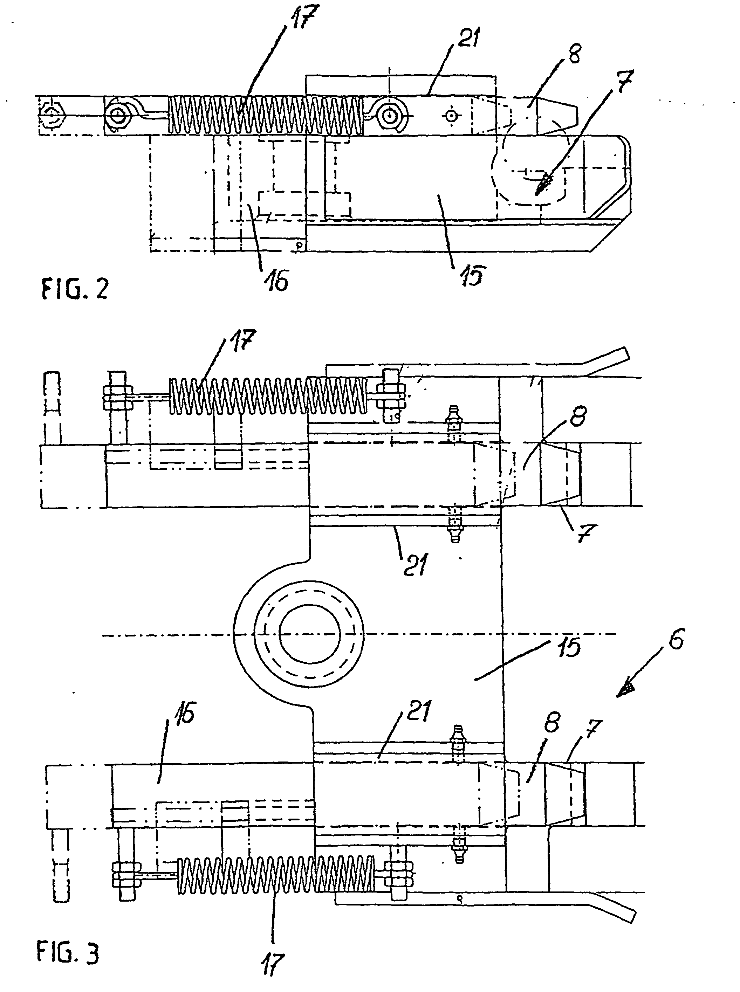

- Fig. 2: eine Seitenansicht eines Schlittens,
- Fig. 3: eine Draufsicht gemäß Fig. 1,

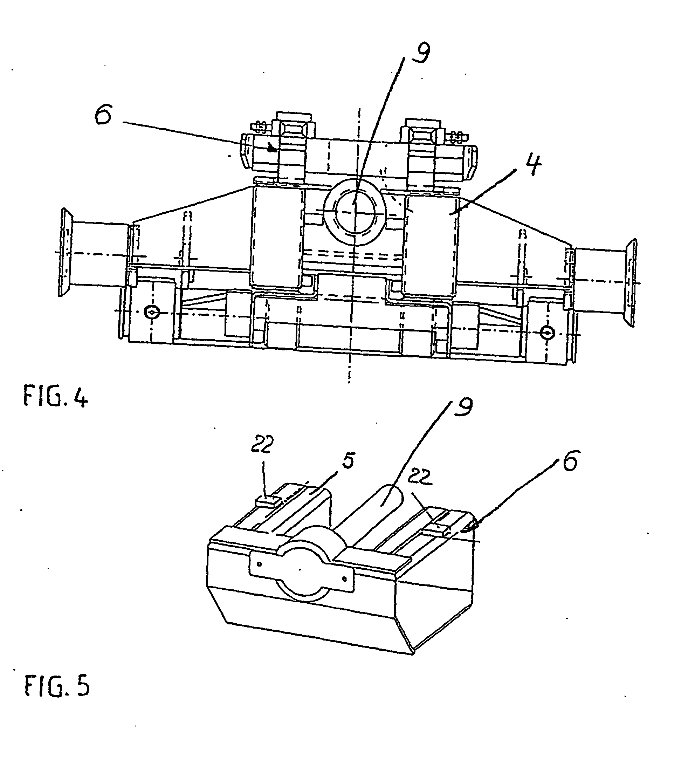

- Fig. 4: eine Vorderansicht gemäß Fig. 1 **und**
- Fig. 5: einen Ausschnitt der Endzone des Kipprahmens mit angeordneten Stoppern für das Verriegelungselement des Schlittens.

Bei der dargestellten Anordnung ist ein am Fahrzeugchassis angeordneter ortsfester Hilfsrahmen 1 zur Mittenaufnahme eines nicht dargestellten Wechselbehälters über entsprechende Aufnahmelager 2 und Laufrollen 3 vorgesehen. Dem Hilfsrahmen 1 ist ein Kipprahmen 4 zugeordnet, der Führungsschienen 5 für einen Schlitten 6 mit beidseitigen Aufnahmen 7 aufweist. Zum Antrieb des Schlittens 6 besitzt der Kipprahmen 4 eine in Längsrichtung verlaufende Spindel 9, die über ein Getriebe 10 antreibbar ist und über zugeordnete Mittel am Schlitten 6 eine Verstellung bewirkt.

In diesem Fall besitzt der Kipprahmen 4 Aufnahmebalken 11 mit außenliegenden Rollen 12 zur Aufnahme des Wechselbehälters. Für die Verstellung greifen an einer Traverse 13 des Kipprahmens 4 Kippzylinder 14 an, die mit ihren anderen Ende am Hilfsrahmen 1 angelenkt sind.

Am Ende des Hilfsrahmens 1 ist ein schwenkbares Führungselement zur Ausbildung einer Schlittenführung des Kipprahmens 4 angeordnet. Hierbei werden Schienen-Führungen am Kipprahmen 4 über Gegenlager des Führungselementes aufgenommen und ermöglichen unabhängig von der Stellung des Kipprahmens 4 eine geführte Gleitbewegung.

Um eine definierte Schwenkbewegung des Kipprahmens 4 entsprechend der gewünschten Handhabung des Wechselbehälters zu ermöglichen, besitzt der Kipprahmen 4 im Abstand versetzte Halteelemente 18 als Gegenlager an seinen Außenseiten, die über verschwenkbare Haken 19 als korrespondierende Aufnahmeelemente in den Bereich der Halteelemente 18 verschwenkbar sind und somit mit dem schwenkbaren Führungselement eine definierte Kippachse 20 bilden.

Damit ist es möglich, durch Verstellung des Schlittens 6 mit den Aufnahmen 7 diverse abgestimmte Handhabungen des Wechselbehälters einschließlich der Durchführung eines Aufnahme- oder Absetzvorganges durchzuführen.

Die verstellbaren Schlitten 6 mit den Aufnahmen 7 für eine Transportöse des Wechselbehälters, wird durch ein Grundelement 15 und einem zugeordneten und am Grundelement verschiebbar geführten Verriegelungselement 16 gebildet. Am Grundelement 15 sind in dieser Ausbildung beidseitig Aufnahmen 7 ausgebildet und das Verriegelungselement 16 trägt den Aufnahmen 7 zugeordnete Dorne 8, die in einer Verriegelungsposition oberhalb der Aufnahmen 7 angeordnet sind und eine aufgenommen Transportöse des Wechselbehälters in den Aufnahmen 7 festlegen. Es sind hierbei Grundelement 15 und Verriegelungselement 16 sind dabei über seitlich zugeordnete Federn 17 verbunden und halten die Verriegelungsposition aufrecht.

Am Grundelement 15 sind Führungen 21 im Vierkantquerschnitt angeordnet, durch die die Dorne 8 des Verriegelungselementes 16 geführt gehalten werden und damit auch eine Zuordnung von Grund- und Verriegelungselement 15,16 erfolgt.

Beim Verfahren des Schlittens 6 in die Aufnahmeposition für den Wechselbehälter wird im Endbereich das Verriegelungselement 16 über am Kipprahmen 4 zugeordnete Stopper 22 blockiert, während das Grundelement 15 zur Freigabe der Aufnahmen 7 gegen den Druck der Federn 17 durch die zugeordneten Dorne 8 weiter verschiebbar ist. Somit kann eine Transportöse des Wechselbehälters den Aufnahmen 7 zugeordnet werden, wobei bei der Rückführung des Schlittens 6 selbsttätig über die Federn 17 die Verriegelungsposition eingenommen wird und die Dorne 8 wieder oberhalb der Aufnahmen 7 angeordnet sind.

## Patentansprüche

1. Vorrichtung zur Handhabung von Wechselbehältern auf Fahrzeugen mit einem Kipprahmen, der durch Kippzylinder schwenkbar angeordnet ist und der Kipprahmen eine über einen Schlitten geführte Aufnahme für eine korrespondierende Transportöse am Wechselbehälter zum Aufnehmen, zur Halterung und/oder Verschiebung aufweist, indem der Schlitten mittels Stellmittel über die Länge des Kipprahmens einstellbar ist, der Schlitten (6) aus einem Grundelement (15) mit der Aufnahme (7) und einem am Grundelement (15) verschiebbar geführten Verriegelungselement (16) mit einem der Aufnahme (7) zugeordneten Dorn (8) zum Verriegeln aufweist, wobei Grundelement (15) und Verriegelungselement (16) über Federn (17) gekoppelt sind und der Dorn (8) über die Federn (17) in der Verriegelungsposition gehalten wird, **dadurch gekennzeichnet, daß** in der Aufnahmeposition des Wechselbehälters und Freigabe der Aufnahme (7) am Grundelement (15) das Verriegelungselement (16) über fahrzeugfeste Stopper (22) beim Verschieben des Schlittens (6) blockierbar und das Grundelement (15) zur Freigabe der Aufnahme (7) durch den zugeordneten Dorn (8) weiter verschiebbar ist.

2. Vorrichtung nach Anspruch 1, **dadurch gekennzeichnet, daß** das Grundelement (15) zwei parallele Aufnahmen (7) aufweist und zugeordnete Dorne (3) am Verriegelungselement (16) ausgebildet sind.

3. Vorrichtung nach Anspruch 1 oder 2, **dadurch gekennzeichnet, daß** das Grundelement (15) buchsenartige Führungen (21) für die Dorne (8) des Verriegelungselementes (16) trägt.

4. Vorrichtung nach einem der Ansprüche 1 bis 3, **dadurch gekennzeichnet, daß** die Dorne (8) in ihren Endbereichen verjüngt ausgebildet sind.

## Claims

1. Device for the handling of exchangeable containers on vehicles with a tilting frame which is pivotally arranged by means of tilting cylinders and the tilting frame has a receiver guided via a carriage for a corresponding transport lug on the exchangeable container for receiving, retaining and/or displacing, while the carriage is adjustable along the length of the tilting frame by means of actuating means, the carriage (6) comprises a base element (15) with the receiver (7) and a locking element (16) displaceably guided on the base element (15) with a pin (8) for locking corresponding to the receiver (7), the base element (15) and locking element (16) being coupled via springs (17) and the pin (8) being held in the locking position via the springs (17), **characterised in that** in the receiving position of the exchangeable container and release of the receiver (7) on the base element (15) the locking element (16) can be blocked via stops (22) fixed to the vehicle when the carriage (6) is displaced and the base element (15) can be displaced further to release the receiver (7) by means of the corresponding pin (8).

2. Device according to claim 1, **characterised in that** the base element (15) has two parallel receivers (7) and corresponding pins (3) are constructed on the locking element (16).

3. Device according to claim 1 or 2, **characterised in that** the base element (15) carries bush like guides (21) for the pins (8) of the locking element (16).

4. Device according to any one of claims 1 to 3, **characterised in that** the pins (8) are of tapered construction in their end regions.

## Revendications

1. Dispositif de manutention de conteneurs interchangeables sur des véhicules comprenant un châssis basculant, qui est aménagé de manière à pouvoir pivoter sous l'action de cylindres de basculement et dans lequel le châssis basculant présente un logement guidé sur un coulisseau pour un oeillet de suspension correspondant ménagé sur le conteneur interchangeable à des fins de réception, de fixation et/ou de déplacement, en réglant le coulisseau sur la longueur du châssis basculant via un moyen de réglage, le coulisseau (6) est constitué d'un élément de base (15) avec le logement (7) et d'un élément de verrouillage (16) guidé de façon à pouvoir coulisser sur l'élément de base (15) avec une broche (8) affectée au logement (7) pour le verrouillage, l'élément de base (15) et l'élément de verrouillage (16) étant couplés via des ressorts (17) et la broche (8) étant maintenue en position de verrouillage via les ressorts (17), **caractérisé en ce qu'**en position de réception du conteneur interchangeable et de libération du logement (7) sur l'élément de base (15), l'élément de verrouillage (16) peut être bloqué via des arrêts (22) fixés au véhicule lors du déplacement du coulisseau (6) et l'élément de base (15) peut être encore déplacé pour libérer le logement (7) par la broche (8) qui lui est affectée.

2. Dispositif selon la revendication 1, **caractérisé en ce que** l'élément de base (15) présente deux logements parallèles (7) et des broches associées (3) sont formées sur l'élément de verrouillage (16).

3. Dispositif de verrouillage selon la revendication 1 ou 2, **caractérisé en ce que** l'élément de base (15) porte des glissières 21 en forme de douille pour les broches (8) de l'élément de verrouillage (16).

4. Dispositif selon l'une quelconque des revendications 1 à 3, **caractérisé en ce que** les broches (8) présentent une forme amincie ou conique dans leurs zones d'extrémité.
